# EUROPÄISCHE PATENTSCHRIFT

(11) **EP 0 636 316 B1**
(45) Veröffentlichungstag und Bekanntmachung des Hinweises auf die Patenterteilung: **03.09.1997**
(21) Anmeldenummer: 94109930.1
(22) Anmeldetag: 28.06.1994
(51) Int. Cl.: A21C 3/08

(54) **Vorrichtung zum Erzeugen von Brezelformlingen**
Device for producing pretzel shapes
Appareil pour la production des formes pour les bretzels

(30) Priorität: 29.07.1993 DE 4325498
(43) Veröffentlichungstag der Anmeldung: 01.02.1995
(73) Patentinhaber: Rieth, Stephan, Dipl.-Ing., D-66636 Tholey (DE)
(72) Erfinder: Rieth, Stephan, Dipl.-Ing., D-66636 Tholey (DE)
(74) Vertreter: Bernhardt, Winfrid, Dr.-Ing.

(56) Entgegenhaltungen:
- EP-A- 0 499 964
- DE-A- 2 731 997
- DE-A- 4 032 466

## Beschreibung

Die Erfindung betrifft eine Vorrichtung zum Erzeugen von Brezelformlingen.

Es liegt ihr die Aufgabe zugrunde, eine leistungsfähige Vorrichtung zum Erzeugen von Brezelformlingen zu schaffen.

Gemäß der Erfindung wird dieser Zweck erfüllt mit der Merkmalskombination des Patentanspruches 1.
Vorteilhafte Ausgestaltungen und Weiterbildungen der Erfindung sind Gegenstände der Unteransprüche sowie der Beschreibung.

Die Zeichnungen geben, teilweise schematisiert, ein Ausführungsbeispiel der Erfindung wieder.
- Fig. 1: zeigt eine Vorrichtung zum Erzeugen von Brezelformlingen in senkrechtem Längsschnitt, eine Zuführungs- und Vorschub-Einrichtung in isometrischer Darstellung,
- Fig. 2: zeigt einen Ausschnitt aus Fig. 1 in größerem Maßstab in isometischer Darstellung,
- Fig. 3: zeigt eine Ansicht gemäß Fig. 2 von rechts, die Zuführungs- und Vorschub-Einrichtung in isometrischer Darstellung,
in einer ersten Stellung,
- Fig. 4: zeigt die Ansicht gemäß Fig. 3 in einer zweiten Stellung,
- Fig. 5: zeigt die Ansicht gemäß Fig. 3 in einer dritten Stellung,
- Fig. 6: zeigt die Ansicht gemäß Fig. 3 in einer vierten Stellung,
- Fig. 7: zeigt die Ansicht gemäß Fig. 3 in einer fünften Stellung,
- Fig. 8: zeigt eine Fig. 3 bis 5 entsprechende Ansicht, die Zuführungs- und Vorschub-Einrichtung in gleicher Ansicht, mit einer Abwandlung und
- Fig. 9: zeigt teils eine Ansicht gemäß Fig. 8 von links, teils einen senkrechten Schnitt nach Linie IX-IX in Fig. 8.

Eine Zuführungs- und Vorschubeinrichtung 1 für einen Teigstrang 2 besteht aus einem Förderband 3 und einer an dessen Ende angeordneten Greifeinrichtung 4.
Über dem Förderband 3 sind Leitbleche 5 angeordnet, die den Teigstrang 2 etwa auf der Mitte des Förderbands 3 positionieren. Ferner befindet sich über dem Förderband eine Lichtschranke 6 zur Steuerung der Greifeinrichtung 4.

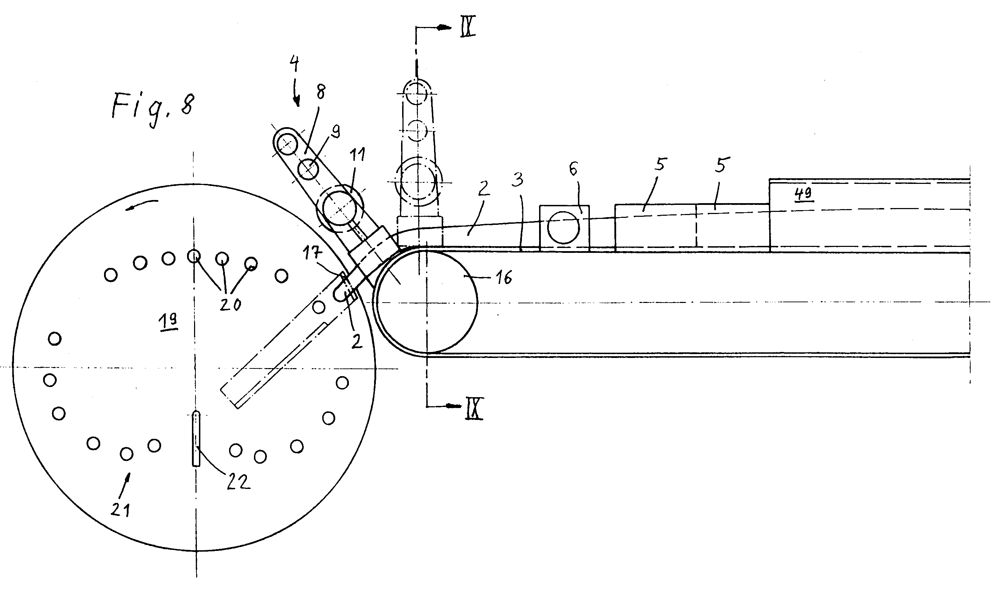

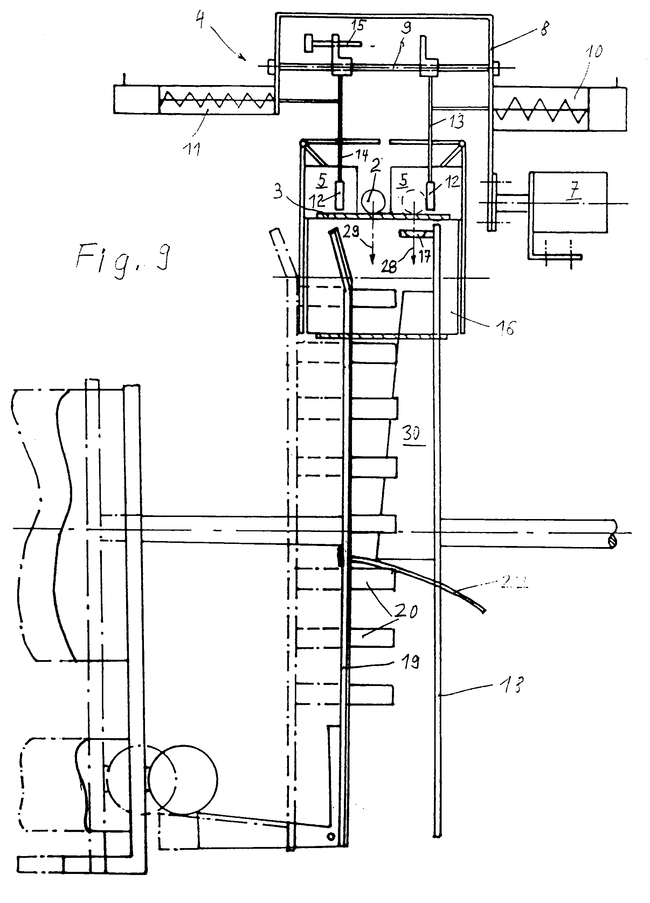

Die in Fig. 8 und 9 konkreter dargestellte Greifeinrichtung 4 weist an einem einseitig durch einen Schwenkantrieb 7 gehaltenen Bügel 8 eine Führung 9 und zwei pneumatische Verschiebezylinder 10 und 11 für zwei mit Klemmbacken 12 versehene Finger 13 und 14 auf.

Zum Greifen des Teigstranges 2 fahren die Verschiebezylinder 10 und 11 aus. Der, etwas stärkere,Verschiebezylinder 10 bestimmt mit seiner Endstellung die Stelle, an der die Klemmbacken 12 den Teigstrang 2 fassen; der Weg des schwächeren Verschiebezylinders 11 wird durch eine verstellbare Anschlagschraube 15 begrenzt. Der gefaßte Teigstrang kann durch Einfahren des Verschiebezylinders 10 bis in seine rückwärtige Endstellung und weiteres Ausfahren des Verschiebezylinders 11 an die gestrichelt gezeichnete Stelle gebracht werden.

Gefaßt werden jeweils der Anfang und das Ende des, abgemessenen, Teigstranges 2. Durch Betätigen des Schwenkantriebes 7 werden der Anfang und das Ende des Teigstranges 2 jeweils genau an einer vorgesehenen Stelle um die Umlenkrolle 16 des Förderbandes 3 herum nach unten geführt.

An die Einrichtung 1 schließen sich eine mit einer Halterung für den Anfang des Teigstranges 2 in Form einer Öse 17 versehene drehbare Scheibe 18 und eine auf gleicher geometrischer Achse mit dieser drehbare, dicht neben ihr angeordnete Scheibe 19 an mit einem als flacher Absatz vorspringenden, durch eine Vielzahl von Stiften 20 gebildeten Wickelkern 21 für den Brezelbogen und an dem Brezelknoten angeordneten Haken 22, der, bezogen auf den Wickelkern 21, nach außen gebogen ist. Die Drehantriebe der Scheiben 18 und 19 sind mit 23 bzw. 24 bezeichnet.

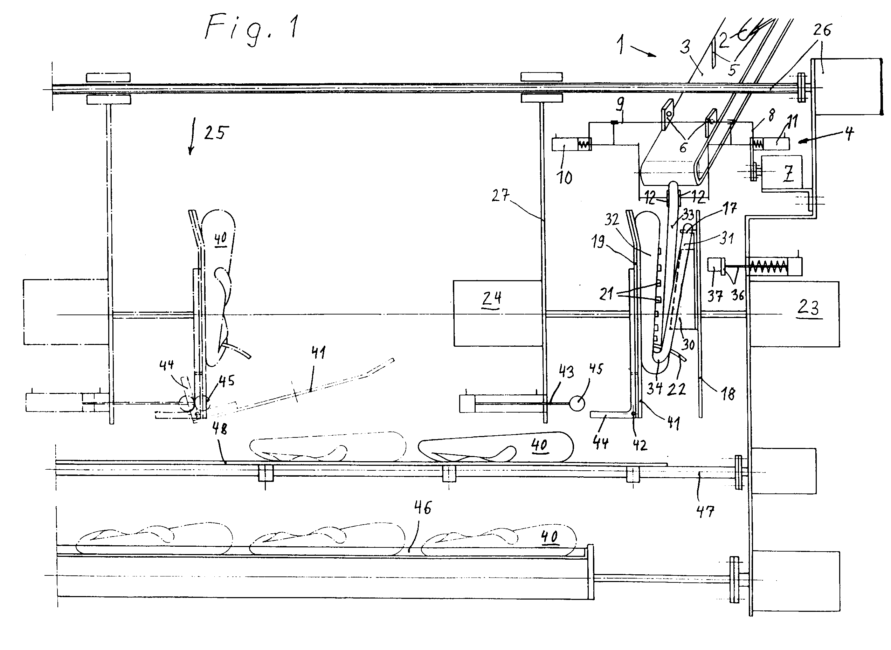

Die Scheibe 19 ist ferner axial verschiebbar aus einer in Fig. 9 ausgezogen gezeichneten engeren Stellung zu der Scheibe 18 in eine in Fig. 9 gestrichelt und in Fig. 1 ausgezogen gezeichnete entferntere Stellung. Über die engere Stellung hinaus kann die Scheibe 19 bis zum Anstoß an der Scheibe 18 verschoben werden, über die entferntere Stellung hinaus in verschiedene Ablagestellungen, von denen eine bei 25 gestrichelt dargestellt ist. Für diese axiale Verstellung ist die Scheibe 19 einschließlich ihres Drehantriebes 24 an einem mittels eines Spindeltriebes 26 verschiebbaren Rahmen 27 angeordnet.

Der Vorschub des Förderbandes 3, die Greifeinrichtung 4, die Drehantriebe 23 und 24 und der Spindelantrieb 26 sind mit einer folgende Abläufe einstellenden Steuerung versehen:

Der Teigstrang 2 wird, geführt durch die Leitbleche 5, auf der Mitte des Förderbands 3 vorgeschoben. Die Lichtschranke 6 nimmt den Anfang des Teigstranges 2 wahr und löst die Betätigung der Greifeinrichtung 4 in der Weise aus, daß der Anfang des Teigstranges 2, nachdem er gefaßt worden ist, an der nach der Seite versetzten, gestrichelt gezeichneten Stelle 29 gehalten wird.

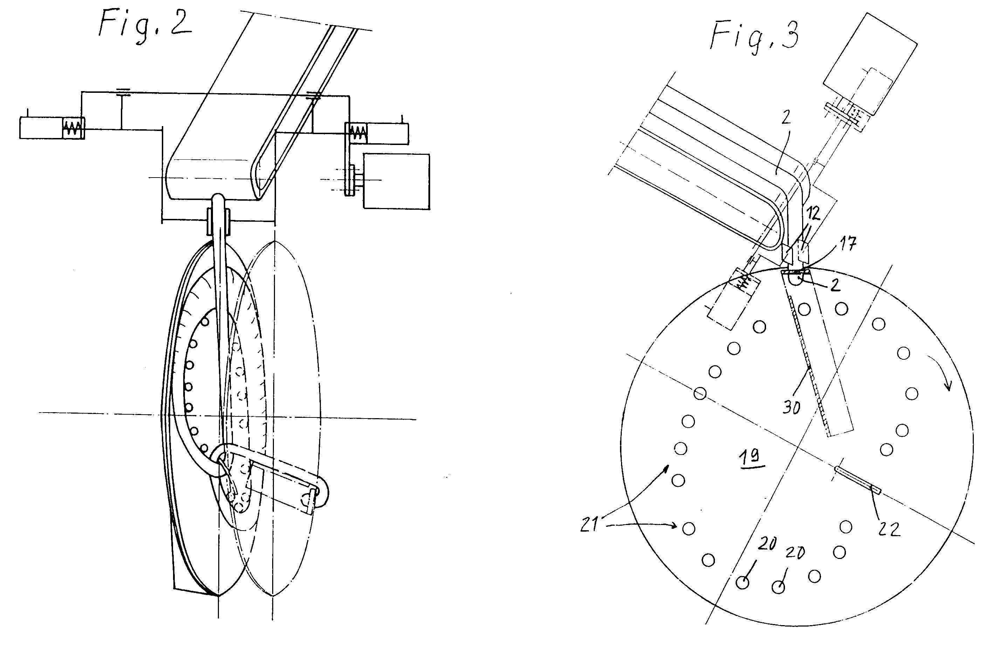

Durch Schwenkung des Bügels 8 der Greifeinrichtung 4 wird der Anfang des Teigstranges 2 nun auf einer nach unten gekrümmten Bahn weiter vorgeschoben. Diese Bahn liegt in gleicher Ebene mit der Kreisbahn, die die Öse 17 bei Drehung der Scheibe 18 beschreibt. Die Scheibe 18 steht in diesem Augenblick vorzugsweise still, die Öse 17 befindet sich an der betreffenden Stelle der Kreisbahn (Fig. 3,8).
Die Scheibe 18 beginnt in Pfeilrichtung zu drehen, die Greifeinrichtung 4 gibt den Teigstrang 2 frei. Die Vorschubgeschwindigkeit des Teigstranges 2 durch das Förderband ist auf den jeweiligen Bedarf abgestimmt.

Der Fortgang ist in Fig. 3 bis 7 dargestellt. Diese Darstellungen sind Ansichten nach Wegschneiden nur der Scheibe 18, nicht aber der an ihr angebrachten Öse 17 sowie einer Leiste 30.

Nach etwa 200° Drehung gegenüber Fig. 3 legt sich der Teigstrang 2 an die Leiste 30 und den Haken 22 an. Bei der weiteren Drehung legt er sich in den Haken 22 hinein. Die Leiste 30 stützt ihn auf der Länge des Brezelsteges ab.
Die Scheibe 19 befindet sich in ihrer engeren Stellung zur Scheibe 18. Der Haken 22 stößt dabei durch eine Ausnehmung der Scheibe 18. Der Wickelkern 21 hat jedoch einen Abstand von der Öse 17, der etwa dem Abstand zwischen den in Fig. 9 gestrichelt bzw. durchgezogenen gezeichneten Stellen des Teigstranges 2 entspricht.

Die Fortsetzungen dieser Stellen zu der Öse 17 und dem Wickelkern 21 hin werden im folgenden als Vorschubstelle 28 bzw. 29 bezeichnet.

Die zuerst eingenommene Vorschubstelle 28 wird von dem Teigstrang 2 alsbald verlassen, da sich bei der Drehung der Scheibe 18 die Öse 17 auf ihrer Kreisbahn entfernt und der von dem Förderband 3 weiter vorgeschobene Teigstrang 2 durch die Leitbleche 5 auf der Mitte geführt ist, womit sich von selbst die Vorschubstelle 29 einstellt.

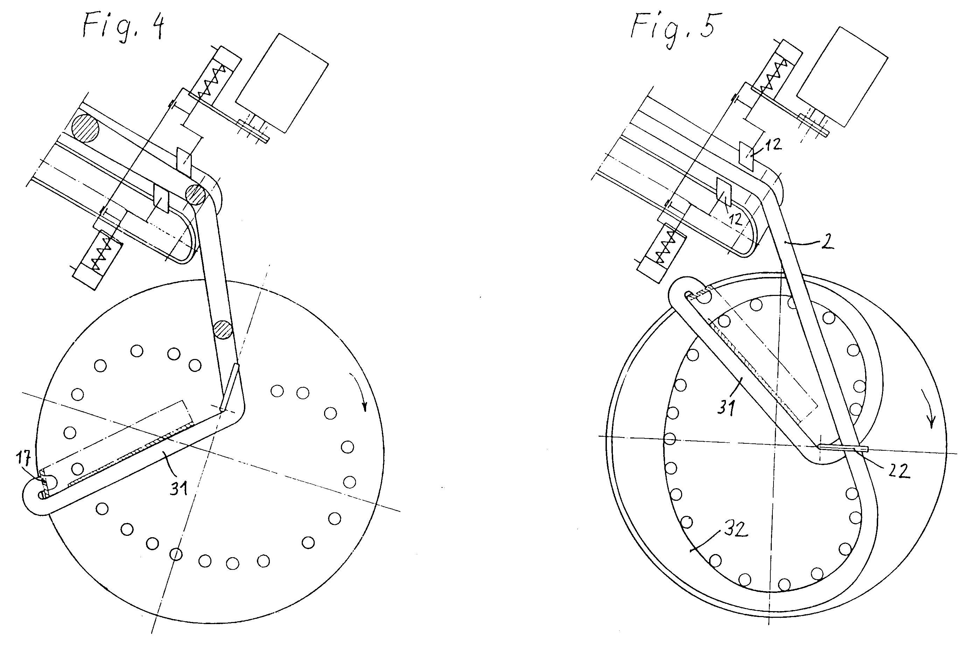

Die Verlagerung von der Vorschubstelle 28 zu der Vorschubstelle 29 während des ersten Drehungsabschnittes der Scheibe 18 mit der Öse 17 muß im wesentlichen abgeschlossen sein, wenn sich kurz nach der Stellung gemäß Fig. 4 der Teigstrang 2 an den Wickelkern 21 anlegt.
Die Scheibe 19 muß zur Stelle sein, wenn sich der Teigstrang 2 an den Haken 22 anlegt. Vorher kann sie sich z.B. noch auf dem Rückweg von einer Ablagestellung befinden.

Die Vorschubstelle 29 liegt in der Querschnittsebene des Wickelkernes. Diese liegt neben der Öse 17, so daß diese und der Anfang des Teigstranges 2 beim weiteren Fortgang der Drehung nach der Stellung gemäß Fig. 4 Platz haben, an dem zugeführten Teigstrang 2 vorbeizukommen.

Bevor die Öse 17 und der Anfang des Teigstranges 2 kurz nach der Stellung gemäß Fig. 5, also nach dem Umschlingen des Wickelkernes und nochmaligem Einlegen des Teigstranges in den Haken 22, ein zweites Mal an dem zugeführten Teigstrang 2 vorbeikommen, wird mit einer kurzen Bewegung durch den Spindeltrieb 26 die Scheibe 19 unter Beibehaltung der normalen Vorschubstelle 28 in die bereits erwähnte entferntere Stellung von der Scheibe 18 mit der Öse 17 gerückt. Wie aus Fig. 1 ersichtlich, wird damit der von der Öse 17 zu dem Haken 22 sich erstreckende erste Brezelsteg 31 von dem Brezelbogen 32 abgespreizt und damit Platz geschaffen, den nach dem zweiten Einlegen in den Haken 22 folgenden zweiten Brezelsteg 33 zwischen den ersten Brezelsteg 31 und den Brezelbogen 32 zu legen, so daß der Brezelknoten 34 entsteht.

Entscheidend für den Formgebungsvorgang sind also die drei verschiedenen Relativstellungen der Vorschubstelle 28 bzw. 29 des Teigstranges 2 zu der Scheibe 18 mit der Öse 17 und der Scheibe 19 mit dem Wickelkern 21 und dem Haken 22:
1) Vorschubstelle 28 in der Ebene der Kreisbahn der Öse 17 zum Einführen des Teigstranges in die Öse und bei der ersten Bewegung der Öse 17 auf ihrer Kreisbahn,
2) Vorschubstelle 29 in der neben dieser Ebene befindlichen Querschnittsebene des Wickelkernes 21, um den Brezelbogen 32 neben der Öse 17, die den Anfang des Teigstanges 2 hält, zu legen, und schließlich
3) Vorschubstelle 29 in einer Ebene zwischen den beiden vorgenannten Ebenen, die dann in einen größeren Abstand voneinander gestellt sind.

Um nun noch das Ende des Teigstranges 2 genau an den Brezelbogen 32 anzulegen, wird noch einmal die Greifeinrichtung 4 bestätigt und das Ende an der Vorschubstelle 29, wiederum durch Verschwenken des Bügels 8 der Greifeinrichtung 4, herabgeführt. Gleichzeitig wird die Scheibe 19 auf die Scheibe 18 zu verschoben bis zum Anstoß der Stifte 20 an dieser. Dabei werden das Ende und gleichzeitig der Anfang des Teigstranges 2 an den Brezelbogen 32 angedrückt. Auch wird der Brezelknoten 34 etwas zusammengedrückt.
Noch einmal individuell angedrückt werden das Ende und gleichzeitig der Anfang des Teigstranges an den Brezelbogen 32 durch jeweils einen in Fig. 1 dargestellten pneumatischen Stößel 36, der eine entsprechende Ausnehmung in der Scheibe 18 durchsetzt und zugleich ein Messer 37 aufweist, mit dem er den überstehenden Rest 38 bzw. 39 abschneidet. Dabei stehen die Scheiben 18 und 19 wieder.
Das Fassen und genaue Führen des Endes des Teigstranges 2 könnte ggf. durch einfachere Maßnahmen ersetzt werden.

Der Brezelknoten 34 könnte auch mehrfach geschlungen werden lediglich durch mehrfache Drehung der Scheiben 18 und 19 in derselben Stellung.

In den Ablagestellungen 25 wird der Brezelformling 40 durch eine Abziehscheibe 41 von dem Wickelkern 21 abgezogen und abgeworfen, die an der Scheibe 19 anliegt, wobei sie in entsprechenden Ausnehmungen von den Stiften 20 und dem Haken 22 durchsetzt wird, und um eine nahe dem unteren Rand der Scheibe 19 angeordnete Achse 42 mittels eines pneumatischen Stößels 43 kippbar ist. Der Stößel 43 stößt dabei einfach durch eine Ausnehmung in der Scheibe 19 hindurch von hinten gegen die Abziehscheibe 41. Beim Verschwenken der Abziehscheibe 41 legt sich eine starr mit ihr verbundene Gabel 44 hinter eine das vordere Ende des Stößels 43 bildende Kugel 45, so daß diese beim Zurückziehen des Stößels 43 die Gabel 44 niederdrücken muß und damit die Abziehscheibe 41 zurückstellt. Die Beigung des Hakens 22 entspricht der Schwenkbewegung der Abziehscheibe 41.
Der Ablageplatz, auf den die Brezelformlinge 40 fallen, wird durch ein längliches, um eine waagerechte Längsachse 47 schwenkbares Tablett 48 gebildet. Darunter ist ein Förderband 46 oder ein verschiebbares Backblech angeordnet. Durch Verschwenken des Tabletts 48 um seine Längsachse 47 werden die Brezelformlinge 40 auf das Förderband 46 übergeben und zugleich gedreht, so daß dann ihre Vorderseite nach oben liegt.

In einem auf dem Förderband 3 angeordneten Behandlungskanal 49 kann der Teigstrang 2, soweit erforderlich, für die beschriebenen Vorgänge konditioniert oder auch sonst behandelt werden. Beispielsweise kann der Teig abgekühlt werden, um ihn zu verfestigen und/oder zu deaktivieren und/oder sein Haftverhalten zu beeinflussen. Auch ein Bestäuben mit Mehl oder Salz wäre möglich, um ein Ankleben an den beschriebenen Einrichtungen zu verhindern. Auch ein Besprühen mit Wasser oder Lauge kommt in Betracht, um, ggf. auch durch das bloße Glätten der Oberfläche, einem Anhaften entgegenzuwirken.

Lediglich durch Auswechseln der Scheiben 18 und 19 und entsprechendes Umprogrammieren der Steuerung läßt sich die Vorrichtung auf andere Brezelformen und -größen umrüsten einschließlich verschiedener Dicken der Teigstränge.

Die Vorrichtung kann mit ihrer beschriebenen Möglichkeit, die Brezelformlinge in Querrichtung zu einem Förderband oder zu Backblechen hintereinander abzulegen, sehr gut in bestehende Anlagen zur Brezelherstellung integriert werden.

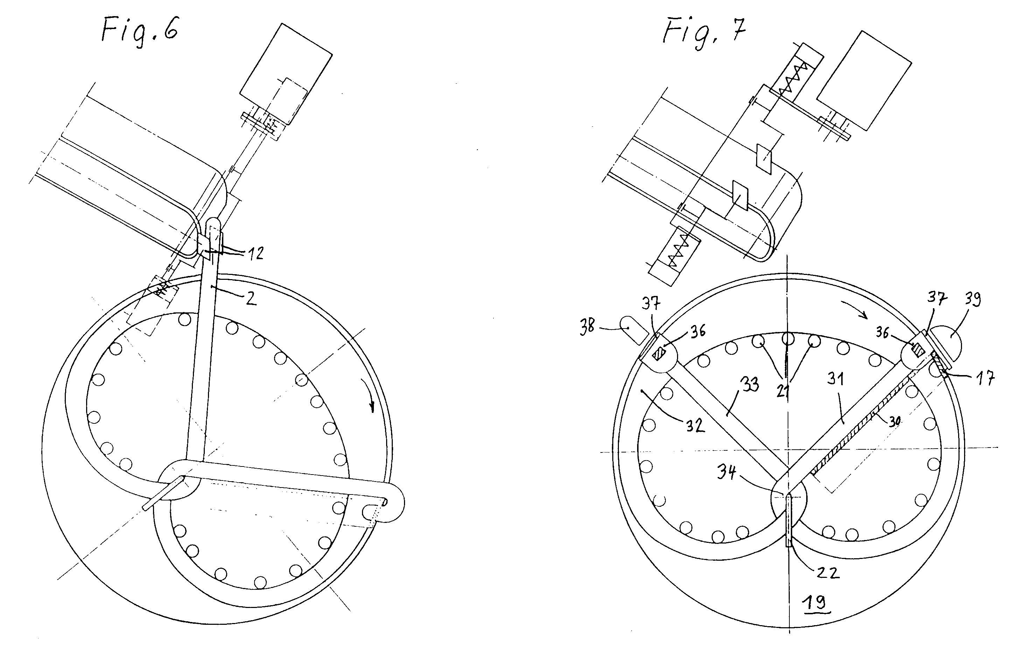

An Einzelheiten der Vorrichtung sind vielerlei Abwandlungen möglich. Beispielsweise könnte die Greifeinrichtung 4 ersetzt werden, ggf. auch das Förderband, durch ein Fördern der Teigstränge mittels sie zwischen sich einfassender, am Umfang ausgekehlter Rollen. Zum Einführen in die Öse 17 könnte ein Trichter, ggf. in Verbindung mit einem Stößel, dienen. Statt der Öse 17 wäre auch eine Gabel, eine Kerbe, ein Greifer oder ein Sauger möglich als Halterung für den Anfang des Teigstranges, Entsprechendes für das Ende. Um eine Drehdurchführung der Saugleitung zu vermeiden, könnte ein Saugschlauch eingerichtet und könnten die Scheiben 18 und 19 zwischen den Fertigungsgängen zurückgedreht oder von Mal zu Mal in verschiedenen Richtungen gedreht werden. Der Vorgang ist mit beiden Drehrichtungen möglich, siehe die umgekehrte Drehrichtung in Fig. 7. Zum Abschneiden der überstehenden Reste könnte ein Messer am Umfang der Scheibe 19 in Position gebracht werden. Um den Brezelformling in die Ablagestellung(en) zu bringen, könnte ihn auch die Scheibe 18 zunächst übernehmen; der Haken 22 wäre dann nicht gekrümmt.

Die verschiedenen Relativstellungen lassen sich auf verschiedenste Weise verwirklichen.
Beispielsweise wäre es auch möglich, daß eine verschiebbare Scheibe 18 mit der Öse 17 in die Vorschubstellung 29 gebracht wird, um hier den Anfang des Teigstranges 2 in die Öse 17 einzuführen, und daß die Öse 17 den Teigstrang 2 beim Zurückkehren in ihre Kreisbahnebene mitzieht; die Vorschubstelle 28 in dieser Ebene wäre dann noch ansatzweise, als Grenzfall, verwirklicht, indem der Teigstrang von dem Förderband 2 aus zunächst schräg in diese Ebene führt und auf jeden Fall in ihr endet.

## Patentansprüche

1. Vorrichtung zum Erzeugen von Brezelformlingen(40), gekennzeichnet durch
- eine Zuführungs- und Vorschub-Einrichtung (1) für den Teigstrang (2),
- eine an diese Einrichtung (1) anschließende, auf einer Kreisbahn bewegbare Halterung (17) für den Anfang des Teigstranges (2),
- einen koaxial mit dieser Kreisbahn drehbaren, neben ihr angeordneten Wickelkern (21) für den Brezelbogen (32) sowie einen an dem Brezelknoten (34) den Teigstrang (2) fassenden Haken (22),
- Verschiebeeinrichtungen (10-14;26) zur Einstellung von verschiedenen Relativstellungen zwischen der Vorschubstelle (28;29) des Teigstranges (2), der Halterung (17) für den Anfang des Teigstranges (2) und dem Wickelkern (20), wobei
- in einer ersten Relativstellung (Fig. 3) die Vorschubstelle (28) des Teigstranges (2) mindestens ansatzweise in gleicher Ebene mit der Kreisbahn der Halterung (17) liegt,
- in einer zweiten Relativstellung (Fig. 4) die Vorschubstelle (29) neben dieser Ebene in der Querschnittsebene des Wickelkernes (21) liegt und
- in einer dritten Relativstellung (Fig. 1,5) die Vorschubstelle (29) in einer Ebene zwischen den beiden vorgenannten Ebenen liegt,
- Einrichtungen (36) zum Andrücken der Enden der beiden Brezelstege (31;33) an den Brezelbogen (32)
- sowie eine Steuerung der zugehörigen Dreh (23;24)- und Verschiebeantriebe (1,7,10,11,26) derart, daß
- in der ersten Relativstellung (Fig. 3) der Anfang des Teigstranges (2) in die Halterung (17) eingeführt wird, oder diese Relativstellung nach dem Einführen eingenommen wird,
- wahrend eines ersten Drehungsabschnittes der Halterung (17), vor dem Anlegen des Teigstranges (2) an den Wickelkern (21), die zweite Relativstellung (Fig.4) herbeigeführt wird,
- nach dem Umschlingen des Wickelkernes (21) und nochmaligem Einlegen des Teigstranges (2) in den Haken (22) mit einer kurzen Bewegung die dritte Relativstellung (Fig. 1,5) herbeigeführt wird und
- nach Erreichen der vorgesehenen Endstellung des zweiten Brezelsteges (33) dessen Ende an den Brezelbogen (32) angedrückt wird.

2. Vorrichtung nach Anspruch 1,
dadurch gekennzeichnet,
daß gleichzeitig mit dem Ende des zweiten Brezelsteges (33) das Ende des ersten (31) angedrückt wird.

3. Vorrichtung nach Anspruch 1 oder 2,
dadurch gekennzeichnet,
daß die Zuführungs- und Vorschub-Einrichtung (1) aus einem Förderband (3) und einer an dessen Ende angeordneten Greifeinrichtung (4) besteht, die, vorzugsweise durch Schwenkung (7,8), vorzugsweise um das Förderbandende nach unten, auf die Halterung (17) zu beweglich ist.

4. Vorrichtung nach Anspruch 3,
dadurch gekennzeichnet,
daß die Halterung (17) aus einer, vorzugsweise an einer zu dem Wickelkern parallelen Scheibe (18) angebrachten, Öse (17) oder Gabel oder Kerbe oder einem Greifer oder Sauger besteht.

5. Vorrichtung nach einem der Ansprüche 1 bis 4,
dadurch gekennzeichnet,
daß der Wickelkern (21) als an einer Scheibe (19) vorspringender flacher Absatz gebildet ist, vorzugsweise in Form einer Vielzahl an der Scheibe (19) vorstehender Einzelelemente (20).

6. Vorrichtung nach einem der Ansprüche 1 bis 5,
dadurch gekennzeichnet,
daß der Haken (22) nach der Außenseite des Brezelformlings (40) gebogen ist.

7. Vorrichtung nach einem der Ansprüche 1 bis 6,
dadurch gekennzeichnet,
daß die Verschiebeeinrichtungen (10-14;26) zur Einstellung der verschiedenen Relativstellungen mindestens teilweise in Axialverschiebeeinrichtungen (26) der Halterung (17) und/oder des Wickelkernes (21) bestehen.

8. Vorrichtung nach einem der Ansprüche 1 bis 7,
dadurch gekennzeichnet,
daß die Zuführungs- und Vorschubeinrichtung (1), insbesondere die Greifeinrichtung (4) nach Anspruch 3, zu einer Verschiebeeinrichtung (10-14) zur Einstellung verschiedener Relativstellungen ausgestaltet ist.

9. Vorrichtung nach Anspruch 8,
dadurch gekennzeichnet,
daß die in der zweiten Relativstelung (Fig. 4) vorhandene Vorschubstellung (29) die normale ist und zur Herbeiführung der ersten Relativstellung (Fig. 3) die Greifeinrichtung (4) nur den Anfang des Teigstranges (2) von der normalen Vorschubstelle (29) kurzzeitig nach der Seite wegzieht.

10. Vorrichtung nach einem der Ansprüche 7 bis 9,
dadurch gekennzeichnet,
daß zur Herbeiführung der dritten Relativstellung (Fig. 1,5) der Wickelkern (21) unter Beibehaltung der normalen Vorschubstellung (29) in einen größeren Abstand von der Halterung (17,18) axial verschiebbar ist.

11. Vorrichtung nach einem der Ansprüche 1 bis 10,
dadurch gekennzeichnet,
daß der Wickelkern (21) in mindestens eine, vorzugsweise mehrere hintereinanderliegende, Ablagestellung(en) (25) axial verschiebbar ist.

12. Vorrichtung nach einem der Ansprüche 1 bis 17,
dadurch gekennzeichnet,
daß die Kreisbahn der Halterung (17,18) und der Wickelkern (21) mit waagerechter Achse angeordnet sind.

13. Vorrichtung nach den Ansprüchen 11 und 12
dadurch gekennzeichnet,
daß der Wickelkern oder eine von den Einzelelementen (20) und dem Haken (22) durchsetzte Abziehscheibe (41) in der bzw. den Ablagestellung(en) bei unten angeordnetem, nach unten weisenden Haken (22) kippbar ist, vorzugsweise um eine nahe dem unteren Rand der Scheibe (19) angeordnete Achse (42), und darunter ein Ablageplatz (48) für den Brezelformling (40) vorgesehen ist.

14. Vorrichtung nach Anspruch 13,
dadurch gekennzeichnet,
daß der Ablageplatz (48) durch ein längliches, um eine waagerechte Längsachse (47) schwenkbares Tablett (48) gebildet ist, unter dem vorzugsweise ein Förderband (46) oder ein verschiebbares Backblech angeordnet ist.

## Claims

1. An apparatus for producing pretzel shapes (40)
characterised by
- a feed and advance device (1) for the dough strand (2), followed by
- a holder (17) movable on a circular path, for the beginning of the dough stand (2),
- a reel hub (21) for the pretzel arc (32), rotatable coaxially to this circular path and mounted adjacent to the same, and a hook (22) catching the dough strand (2) at the pretzel knot (34),
- displacement devices (10-14; 26) for setting various relative positions among the place of advancement (28; 29) of the dough strand (2), the holder (17) for the beginning of the dough strand (2), and the reel hub (20), wherein
- in a first relative position (Fig. 3) the place of advancement (28) of the dough strand (2) at least at the start is in the same plane as the circular path of the holder (17),
- in a second relative poisition (Fig. 4) the place of advancement (29) lies adjacent this plane in the cross-sectional plane of the reel hub (21), and
- in a third relative position (Figs. 1, 5) the place of advancement (29) lies in a plane between the two aforementioned planes,
- devices (36) for pressing the ends of the two pretzel crosspieces (31; 33) to the pretzel arc (32),
- and a control means for the associated rotary (23; 24) and displacement drives (1, 7, 10, 11, 26) such that
- in the first relative position (Fig. 3) the beginning of the dough strand (2) is inserted into the holder (17), or this relative position is assumed after the insertion has taken place,
- during a first rotational segment of the holder (17), before the dough strand (2) is applied to the reel hub (21), the second relative position (Fig. 4) is brought about,
- after the dough strand (2) is looped around the reel hub (21) and is again laid over the hook (22), the third relative position (Fig. 1, 5) is brought about with a short movement, and
- when the designated final position of the second pretzel crosspiece (33) is reached its end is pressed onto the pretzel arc (32).

2. The apparatus according to claim 1,
characterised in that
the end of the first pretzel crosspiece (31) is pressed down simultaneously with the end of the second pretzel crosspiece (32).

3. The apparatus according to claim 1 or 2,
characterised in that
the feed and advance device (1) comprises a conveyor belt (3) and a grasping device (4) mounted at its end and preferably movable by pivoting (7, 8) preferably downward around the conveyor belt end and toward the holder (17).

4. The apparatus according to claim 3,
characterised in that the holder (17) comprises an eye (17) or fork or notch or grasper or suction means, preferably attached to a disc (18) parallel to the reel hub.

5. The apparatus according to any of claims 1 to 4,
characterised in that
the reel hub (21) is designed as a flat projection on a disc (19), preferably in the form of a plurality of single elements (20) protruding on the disc (19).

6. The apparatus according to any of claims 1 to 5,
characterised in that
the hook (22) is bent toward the outside of the pretzel shape (40).

7. The apparatus according to any of claims 1 to 6,
characterised in that
the displacement devices (10-14; 26) for setting the different relative positions at least partly comprise axial displacement devices (26) of the holder (17) and/or of the reel hub (21).

8. The apparatus according to any of claims 1 to 7,
characterised in that
the feed and advancement device (1), particularly the grasping device (4) according to claim 3, is designed as a displacement device (10-14) for setting different relative positions.

9. The apparatus according to claim 8,
characterised in that
the advancement position (29) existing in the second relative position (Fig. 4) is the normal position, and that to bring about the first relative position (Fig. 3) the grasping device (4) briefly pulls only the beginning of the dough strand (2) to one side, away from the normal advancement position (29).

10. The apparatus according to any of claims 7 to 9,
characterised in that
to bring about the third relative position (Figs. 1, 5) the reel hub (21) is axially displaceable to a greater distance from the holder (17, 18) while maintaining the normal advancement position (29),

11. The apparatus according to any of claims 1 to 10,
characterised in that
the reel hub (21) is axially displaceable into at least one, preferably several consecutive delivery position(s) (25).

12. The apparatus according to any of claims 1 to 11,
characterised in that
the circular path of the holder (17, 18) and the reel hub (21) are arranged on a horizontal axis.

13. The apparatus according to claims 11 and 12,
characterised in that
the reel hub or a removal disc (41) with the single elements (20) and the hook (22) interspersed thereon can be tilted to the delivery position or positions when the hook (22) is disposed at the bottom and points downward, and further is preferably tiltable around an axis (42) near the lower edge of the disc (19), and that a deposit place (48) for the pretzel shape (40) is provided therebelow.

14. The apparatus according to claim 13,
characterised in that
the deposit place (48) is formed by an elongated tray (48) swivelled about a horizontal longitudinal axis (47), with preferably a conveyor belt (46) or a displaceable baking sheet located beneath said tray.

## Revendications

1. Dispositif pour la production de bretzels moulés (40), caractérisé
- par un dispositif d'alimentation et d'avance (1) pour le boudin de pâte (2),
- par une fixation (17) pour le début du boudin de pâte (2), consécutive à ce dispositif (1) et pouvant être déplacée le long d'une trajectoire circulaire,
- par une pièce d'enroulement (21) tournant coaxialement avec cette trajectoire circulaire et disposée à côté de celle-ci pour les boucles (32) du bretzel ainsi que par un crochet (22) agrippant le boudin de pâte (2) au niveau du noeud (34) du bretzel,
- par des dispositifs de déplacement (10-14; 26) pour le réglage de différentes positions relatives entre les positions d'avance (28; 29) du boudin de pâte (2), la fixation (17) pour le début du boudin de pâte (2) et la pièce d'enroulement (20),
- la position d'avance (28) du boudin de pâte (2) étant située, dans une première position relative (fig. 3), au moins au début, dans le même plan que la trajectoire circulaire de la fixation (17),
- la position d'avance (29) étant située, dans une deuxième position relative (fig. 4), à côté de ce plan dans le plan transversal de la pièce d'enroulement (21) et
- la position d'avance (29) étant située, dans une troisième position relative (Fig. 1, 5), dans un plan entre les deux plans mentionnés ci-avant,
- par des dispositifs (36) pour comprimer les extrémités des deux branches (31; 33) du bretzel contre les boucles (32) du bretzel,
- ainsi que par un dispositif de commande pour les dispositifs de rotation (23; 24) et les dispositifs de déplacement (1, 7, 10, 11, 26) correspondants de telle manière
- que, dans la première position relative (fig. 3), le début du boudin de pâte (2) est introduit dans la fixation (17) ou que cette position relative est atteinte après l'introduction,
- que, pendant un premier segment de la rotation de la fixation (17), avant que le boudin de pâte (2) soit placé contre la pièce d'enroulement (21), on passe au delà de la deuxième position relative (fig. 4),
- que, après le bouclage de la pièce d'enroulement (21) et encore une insertion du boudin de pâte (2) dans le crochet (22), on passe au-delà la troisième position relative (fig. 1, 5) par un mouvement court et
- que, lorsqu'on atteint la position finale prévue de la deuxième branche (33) du bretzel, son extrémité est comprimée contre les boucles (32) du bretzel.

2. Dispositif selon la revendication 1, caractérisé en ce que, lorsque l'extrémité de la deuxième branche (33) du bretzel est comprimée, l'extrémité de la première (31) est comprimée simultanément.

3. Dispositif selon la revendication 1 ou 2, caractérisé en ce que le dispositif d'alimentation et d'avance (1) est constitué par une bande transporteuse (3) et un dispositif de prise (4) disposé en son extrémité et qui peut se déplacer vers la fixation (17), de préférence par un mouvement de pivotement (7, 8) de préférence vers le bas autour de l'extrémité de la bande transporteuse.

4. Dispositif selon la revendication 3, caractérisé en ce que la fixation (17) est constituée par un oeillet (17), une fourchette, une rainure, une pince ou un aspirateur, qui est de préférence fixé sur un disque (18) parallèle à la pièce d'enroulement.

5. Dispositif selon une quelconque des revendications 1 à 4, caractérisé en ce que la pièce d'enroulement (21) a la forme d'un talon plat en saillie par rapport à un disque (19), de préférence sous forme d'une multitude d'éléments individuels (20) en saillie par rapport au disque (19).

6. Dispositif selon une quelconque des revendications 1 à 5, caractérisé en ce que le crochet (22) est plié vers le côté extérieur du bretzel moulé (40).

7. Dispositif selon une quelconque des revendications 1 à 6, caractérisé en ce que les dispositifs de déplacement (10-14; 26) pour le réglage des différentes positions relatives sont constitués, au moins partiellement, par des dispositifs (26) de déplacement axial de la fixation (17) et/ou de la pièce d'enroulement.

8. Dispositif selon une quelconque des revendications 1 à 7, caractérisé en ce que le dispositif d'alimentation et d'avance (1), en particulier le dispositif de prise (4) selon la revendication 3, est équipé d'un dispositif de déplacement (10-14) pour le réglage de différentes positions relatives.

9. Dispositif selon la revendication 8, caractérisé en ce que la position d'avance (29) de la deuxième position relative (fig. 4) est la position normale et en ce que, pour passer au-delà de la première position relative (fig. 3), le dispositif de prise (4) écarte uniquement le début du boudin de pâte (2) vers le côté par rapport à la position d'avance (29) normale pendant un court laps de temps.

10. Dispositif selon une quelconque des revendications 7 à 9, caractérisé en ce que, pour passer au-delà de la troisième position relative (fig. 1,5), la pièce d'enroulement (21) peut être déplacée axialement à une plus grande distance de la fixation (17, 18) tout en maintenant la position d'avance (29) normale.

11. Dispositif selon une quelconque des revendications 1 à 10, caractérisé en ce que la pièce d'enroulement (21) peut être déplacée axialement dans au moins une position de réception (25), de préférence dans plusieurs positions de réception (25) disposées les unes derrière les autres.

12. Dispositif selon une quelconque des revendications 1 à 17, caractérisé en ce que la trajectoire circulaire de la fixation (17, 18) et la pièce d'enroulement (21) présentent des axes horizontaux.

13. Dispositif selon une quelconque des revendications 11 et 12, caractérisé en ce que la pièce d'enroulement ou un disque d'éjection (41) traversé par les éléments individuels (20) et le crochet (22) peut être renversé dans la ou les positions de réception lorsque le crochet est disposé dans le bas et tourné vers le bas, de préférence autour d'un axe (42) disposé à proximité du bord inférieur du disque (19) et en ce qu'on a prévu un endroit de réception (48) pour le bretzel moulé (40).

14. Dispositif selon la revendication 13, caractérisé en ce que l'endroit de réception (48) est formé par une tablette (48) longitudinale, pouvant être pivotée autour d'un axe (47) longitudinal, horizontal sous lequel est de préférence disposée une bande transporteuse (46) ou une plaque de cuisson pouvant être déplacée.
